# EUROPEAN PATENT APPLICATION

(11) **EP 1 657 096 A2**
(43) Date of publication of application: **17.05.2006**
(21) Application number: 05017965.4
(22) Date of filing: 18.08.2005
(51) Int. Cl.: B60K 6/04

(54) **Vehicle driving system**

(30) Priority: 10.11.2004 JP 2004325810
(71) Applicant: HITACHI, LTD., Chiyoda-ku Tokyo 100-8280 (JP)
(72) Inventor: Fukasaku, Yoshinori, Hitachi Ltd, Chiyoda-ku Tokyo 100-8220 (JP); Matsuzaki, Norikazu, Hitachi Ltd, Chiyoda-ku Tokyo 100-8220 (JP); Fujiwara, Shin, Hitachi Car Engineering Co.Ltd, Ibaraki 312-0062 (JP); Ito, Masaru, Hitachi Ltd, Chiyoda-ku Tokyo 100-8220 (JP); Yamamoto, Daisuke, Hitachi Ltd, Chiyoda-ku Tokyo 100-8220 (JP)
(74) Representative: Beetz & Partner

(57) **Abstract**

The present invention relates to a vehicle driving system in which one of front wheels (2) and rear wheels (4) is driven by an internal combustion engine (3) and the other thereof is driven by an electric motor (5). The system is comprised of: a generating apparatus (10) that generates electric power by rotation of the internal combustion engine (3); the electric motor (5) driven by electric power outputted from the generating apparatus (10); and a control unit (6) for controlling output power of the generating apparatus (10) in accordance with a driving force requested from a vehicle and controlling the electric motor (5). The generating apparatus (10) comprises a tandem generator equipped with a charge function for charging a vehicle-mounted battery (9) and a power supply function for driving the electric motor (5).

## Description

### BACKGROUND OF THE INVENTION

The present invention relates to a vehicle driving system which drives front and rear wheels of a vehicle using an engine and an electric motor, and particularly to a vehicle driving system equipped with a tandem type AC generator.

A vehicle driving system has been known in Japanese Patent Laid-OpenNo. 2001-333507. The vehicle driving system comprises the following components: a first generator which is driven by a vehicle internal combustion engine to supply a vehicle-mounted accessories with power; a motor which drives other wheels undriven by the internal combustion engine, of the vehicle front and rear wheels (either front wheels or rear wheels are driven by the internal combustion engine); a second generator which is driven by the internal combustion engine to supply the electric motor with power; and a control device which controls the electric motor. The control device includes an external control device in addition to a control device for the second generator.

The external control device outputs an on-off signal for a field current of the second generator as a control instruction for the second generator to enable arbitrary setting of an output voltage or current of the second generator.

On the other hand, a tandem type AC generator used for vehicles has been known in Japanese Patent Laid-Open No. H11(1999)-098789. It supplies a vehicle-mounted battery and vehicle-accessories with first DC power, and supplies an EHC (electric heating catalysis) with second DC power in a high voltage to heat it. Furthermore, it supplies the vehicle mounted battery and the vehicle-accessories with both the first DC power and the second DC power after a predetermined elapsed time since startup of an internal combustion engine.

### SUMMARY OF THE INVENTION

The former prior art is provided with the first generator and second generator. The first generator is driven by the internal combustion engine for driving the vehicle front wheels to supply the vehicle-accessories with power. The dedicated second generator is similarly driven by the internal combustion engine to supply the motor for driving the rear wheels with power. The wheel driving motor is directly driven by the second generator. However, since the respective generators are comprised of completely different mechanisms, the following problems to be solved are remained.

That is, the second generator generates output power depending on the rotation of the internal combustion engine especially, it is hard to desire an increase in voltage when the internal combustion engine drives at a low speed, and hence the second generator leaves us wanting for more as the driving motor.

Oh the other hand, the latter prior art discloses that; the tandem type AC generator supplies the vehicle-mounted battery and the vehicle-accessories with the first DC power; it supplies the EHC with the second DC power in the high voltage to heat the EHC; and it supplies the vehicle mounted battery and the vehicle-accessories with both the first DC power and the second DC power after the predetermined elapse time since startup of the internal combustion engine. It is however also hard to desire an increase in voltage in a manner similar to the former when the internal combustion engine drives at the low speed.

First object of the present invention is to provide a vehicle driving system equipped with a generating apparatus capable of supplying sufficient power to a driving motor regardless of the state of rotation of an internal combustion engine.

Second object of the present invention is to provide a vehicle driving system equipped with a generator served as a heatsink which is either one low in the generated amount of heat, of a generator for a low-voltage generation and a generator for a high-voltage generation. Thereby, the object is to provide the vehicle driving system that makes it possible to enhance cooling efficiency, prevent a reduction in output due to the generated heat, and supply a vehicle mounted battery and a driving motor, etc with sufficient power.

Third object of the present invention is to provide a vehicle driving system equipped with a generating apparatus which makes an electric motor regenerative, ensures stability at braking, and enables to use an auxiliary battery as exciting means for the generator. Thereby, the object is to provide the vehicle driving system that makes it possible to supply sufficient power to a driving motor regardless of the state of rotation of an internal combustion engine.

To solve the aforesaid objects, the present invention provides a vehicle driving system according to the independent claims. The dependent claims relate to preferred embodiments.

A vehicle driving system of the present invention may be configured as follows, to attain the first objective. In the vehicle driving system, one of front wheels and rear wheels is driven by an internal combustion engine and the other thereof is driven by an electric motor. The system may comprise of: a generating apparatus that generates electric power by rotation of the internal combustion engine; the electric motor driven by electric power outputted from the generating apparatus; and/or a control unit for controlling output power of the generating apparatus in accordance with a driving force requested from a vehicle and controlling the electric motor.

Further, the generating apparatus may comprise a tandem generator equipped with a charge function for charging a vehicle-mounted battery and/or a power supply function for driving the electric motor.

A vehicle driving system of the present invention may be configured as follows, to attain the second objective. In the vehicle driving system also, one of front wheels and rear wheels is driven by an internal combustion engine and the other thereof is driven by an electric motor. The system may have the following components: an AC generating apparatus that generates electric power by rotation of the internal combustion engine; and/or the electric motor driven by electric power outputted from the generating apparatus. The AC generating apparatus may be a tandem generator comprising a generator for low-voltage generation, which supplies a vehicle-mounted battery or the like with power, and/or a generator for high-voltage generation, which supplies the electric motor with power.

A vehicle driving system of the present invention may be configured as follows, to attain the third objective. In the vehicle driving system also, one of front wheels and rear wheels is driven by an internal combustion engine and the other thereof is driven by an electric motor. The system may have the following components: a generating apparatus that generates electric power by rotation of the internal combustion engine; the electric motor driven by electric power outputted from the generating apparatus; and/or a control unit for controlling output power of the generating apparatus in accordance with a driving force requested from a vehicle and controlling the electric motor. The generating apparatus may include: a generator for low-voltage generation, having a vehicle-mounted battery charging function; a generator for high-voltage generation, having a power supply function of the electric motor; a relay provided between an output terminal of the generator for high-voltage generation and the electric motor, and on/off-controlled by an output signal of the control unit whose output signal is generated depending upon the running state of the vehicle; and/or an auxiliary battery which functions in response to the relay.

The present invention can provide a vehicle driving system equipped with the generating apparatus, which generates power according to the rotation of the internal combustion engine, having the following separate-excitation/self-excitation circuit. The separate-excitation/self-excitation circuit may be configured in the tandem generator provided with a charge function for charging a vehicle-mounted battery, and/or a power supply function for driving the electric motor as wheel driving motor. Thereby the generating apparatus makes it possible to supply sufficient power to the driving motor regardless of the state of rotation of the internal combustion engine.

The present invention can provide a vehicle driving system with the AC generating system which is configured as the tandem generator comprising the generator for the low-voltage generation and/or the generator for the high-voltage generation. The AC generating system can set either one low in the generated amount of heat, of the generator for low-voltage generation and the generator for high-voltage generation as the heatsink. Thereby, the generating apparatus makes it possible to enhance cooling efficiency, prevent a reduction in output due to generated heat, and supply the vehicle-mounted battery, the driving motor and the like with sufficient power.

The present invention can provide a vehicle driving system with the generating system having the following the relay and the auxiliary battery. The relay may be provided between the output terminal of the generator for high-voltage generation and the vehicle driving motor. The relay may be on/off-controlled by an output signal of a control unit, depends upon a running state of the vehicle. The auxiliary battery can function for the vehicle driving motor as the power supply in response to the relay. Thereby, the generating apparatus can make the vehicle driving motor function as the motor regenerative, and can ensure stability at braking. Further, since the generator for high-voltage generation can be excited with the auxiliary battery, the generator for the power supply of the vehicle driving motor is supplied with sufficient power regardless of the rotation state of the internal combustion engine.

### BRIEF DESCRIPTION OF THE DRAWINGS

Fig. 1 is a vehicle system diagram showing a first embodiment of a vehicle driving system according to the present invention.
Fig. 2 is a control circuit diagram illustrating a first embodiment of a tandem type AC generating apparatus mounted to Fig. 1.
Fig. 3 is a sectional view depicting the first embodiment of the tandem type AC generating apparatus mounted to Fig. 1.
Fig. 4 is a vehicle system diagram showing a second embodiment of a vehicle driving system according to the present invention.
Fig. 5 is a control circuit diagram illustrating a second embodiment of a tandem type AC generating apparatus mounted to Fig. 4.
Fig. 6 is a sectional view depicting the second embodiment of the tandem type AC generating apparatus mounted to Fig. 4.
Fig. 7 is an output characteristic diagram of tandem type AC generating equipment according to the present invention.

### DESCRIPTION OF THE PREFERRED EMBODIMENTS

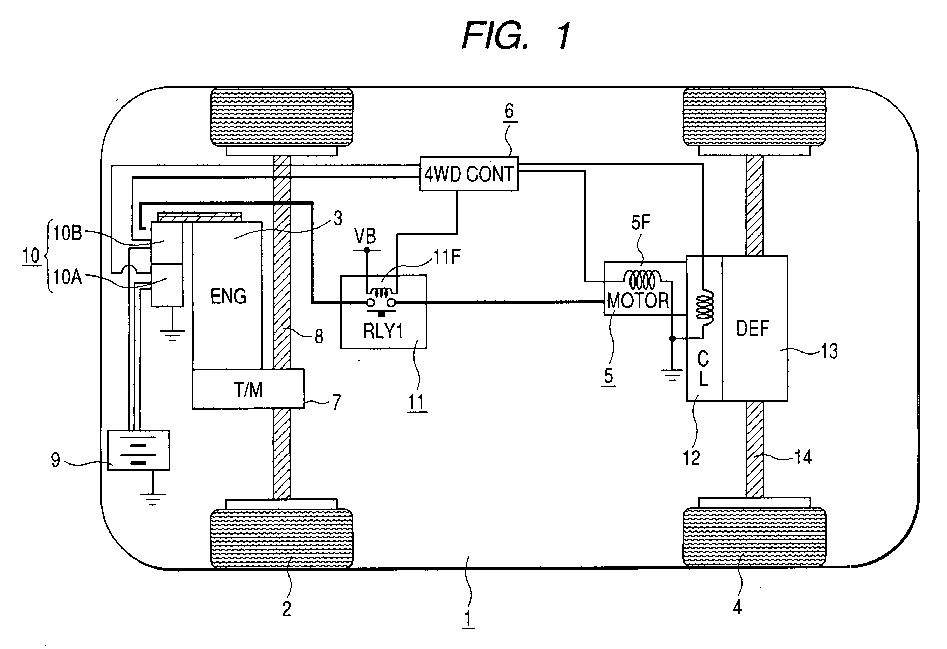

Fig. 1 is a vehicle system diagram showing a first embodiment of a vehicle driving system. Front wheels 2 of a vehicle driving system 1 corresponding to a 4-wheel drive vehicle are driven by an engine (internal combustion engine) 3, and rear wheels 4 thereof are driven by a DC motor 5, respectively. The engine 3 is controlled by an engine control unit (not shown). The output of the engine3, namely a driving force, is transferred to the front wheels 2 through a transmission 7 and a drive shaft 8.

An engine block (not shown) that constitutes the engine 3 is provided with a first generator 10A which supplies a vehicle -mounted battery 9 with electric power. The first generator 10A is rotatably driven by the engine 3 via a belt or the like to generate power.

A second generator 10B is installed at the engine block side by side with the first generator 10A, and is rotatably driven with the first generator 10A. The output of the second generator 10B is larger than that of the first generator 10A and is supplied to the DC motor 5 through a relay 11. The relay 11 is controlled by an output control signal transmitted from a 4WD control unit 6. When a clutch 12 for connecting/disconnecting of mechanical power transfer means is connected, the output of the DC motor 5 is transferred to a drive shaft 14 via a differential gear 13 to drive the rear wheels 4.

That is, when the clutch 12 is turned on by an output sent from the 4WD control unit 6, the DC motor 5 and the differential gear is connected via the clutch. Further the out put from the 4WD control unit6 excites a field coil 5F of the DC motor 5 and a relay coil 11F of the relay 11. Thereby a rectified DC power is supplied from the second generator 10B to an armature of the DC motor 5 to drive the DC motor 5, and the output of the DC motor 5 is transferred to a drive shaft 14 via a differential gear 13. The vehicle-mounted battery 9 works as a power supply of the 4WD control unit 6.

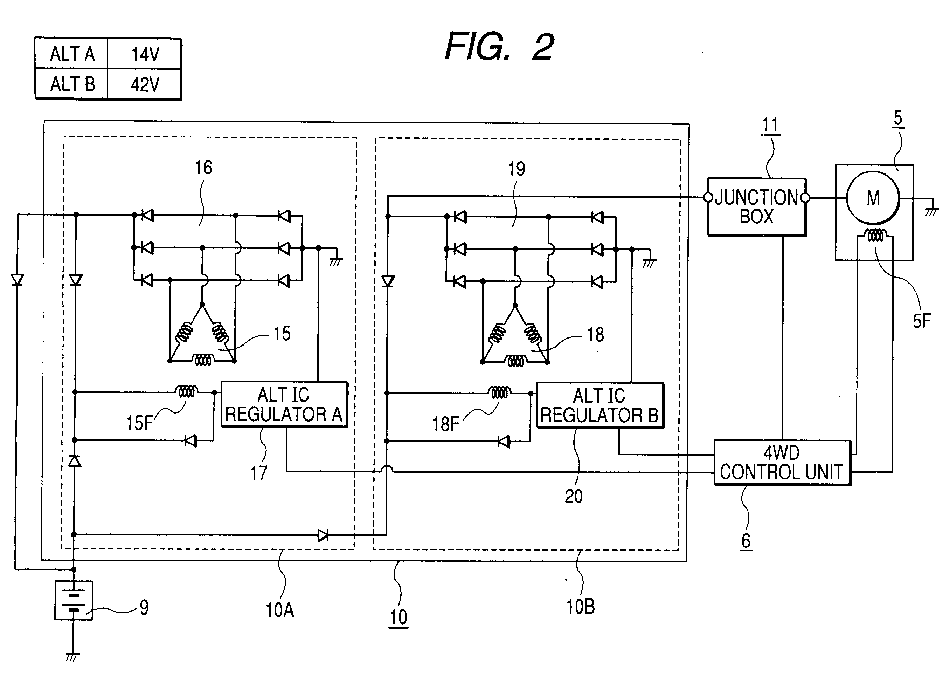

A circuit of a generating apparatus 10 will next be explained with reference to Fig. 2. The generating apparatus 10 is comprised of a so-called tandem generator. The first generator 10A thereof is configured so as to supply an output produced from a Δ(delta)-connected generating coil 15 to the vehicle-mounted battery 9 as a low-voltage power supply (which normally ranges from 10V to 16V) through a full-wave rectifier 16. A field coil 15F is connected with the vehicle-mounted battery 9 to constitute an initiating excitation circuit. Power of the first generator 10A is controlled with a regulator 17. The regulator 17 is driven by the signal outputted from the above-described 4WD control unit 6. In the other hand, the second generator 10B provided side by side with the first generator 10A, its output voltage is set to approximately three times (42V) the output voltage of the first generator 10A. The second generator 10B is provided with a generating coil 18 Δ-connected in a manner similar to the first generator, a full-wave rectifier 19, a field coil 18F excited by the vehicle mounted battery 9 as a initiating excitation, and a regulator 20 controlled by an output signal sent from the 4WD control unit 6.

Upon starting up the engine 3, an exciting current produced from the vehicle-mounted battery 9 is supplied to the regulators 17 and 20 of the first and second generators 10A and 10B, respectively, in accordance with the output signal sent from the 4WD control unit 6, i.e. , the generators starts up by so-called separate excitation. When the engine 3 starts up and the generator 10 is rotatably driven with the engine 3, the generators 10A and 10B are respectively switched from the separate excitation to the self-excitation to continue power generation.

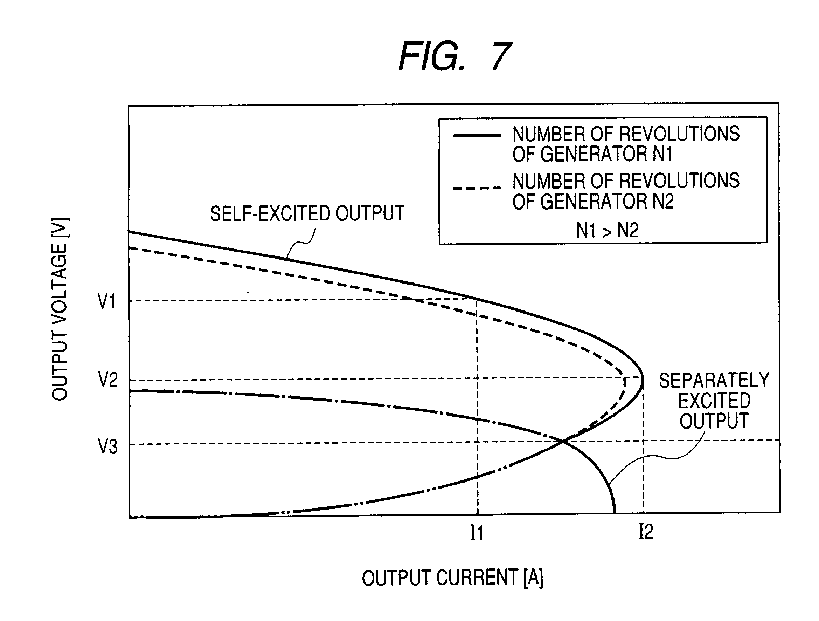

One example of an output characteristic of the second generator 10B is shown in Fig. 7. Both of the battery and the second generator itself are used as current supply sources of a field current of the second generator 10. When the vehicle starts, that is, the second generator 10B starts up or is in a state of low-speed rotation, the second generator 10B is brought to separate excitation based on the power of the vehicle-mounted battery 9, so that the field current of the second generator 10B is represented as an output characteristic that slants to the left as shown in the figure. On traveling of the vehicle subsequent to its start, the second generator 10B is switched to the self-excitation system with the output of the second generator 10B per se as a current supply source, and hence the output of the second generator 10B is produced in proportion to the engine speed, and the output range of the second generator expands in a parabola in terms of both its terminal voltage and current. On the other hand, an output voltage V of the second generator 10B can be considered as an input voltage of the DC generator 5 apart from a slightly drop in voltage applied to each wiring resistance. Thus, the field current of the second generator 10B can be controlled to allow the voltage outputted to the DC motor 5 to be switched to plural stages or to be also switched to predetermined regions continuously, thereby enabling flexible responses to driving forces requested by the vehicle.

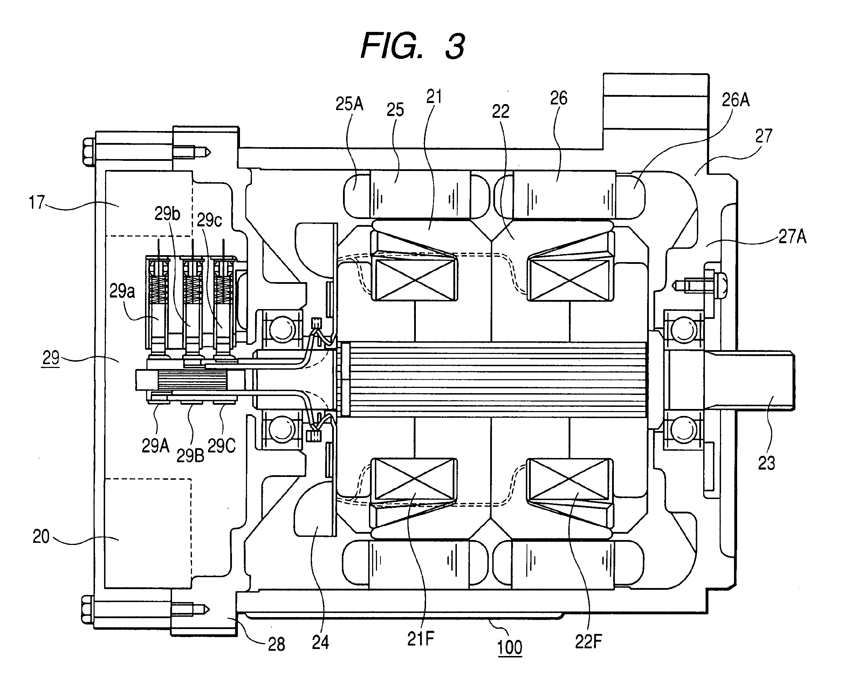

Fig. 3 shows generator 100 employed in the present invention, wherein Lundell rotors 21 and 22 are press-fit in and securedly fixed to a rotating shaft 23. Cylindrical field coils 21F and 22F are respectively mounted to the rotors through an insulating bobbin interposed therebetween. And the pair of rotors 21 and 22 is configured so as to be disposed in close touch with each other. One end of either rotors 21 or rotors22 (rotors 21 in the present embodiment) is provided with a centrifugal fan 24 is securedly fixed by welding or the like. Lead terminals of the field coils 21F and 22F are held on the one end of rotor 21.

Stator cores 25 and 26 respectively placed around the rotors 21 and 22 with rotation gaps interposed therebetween are fixed onto an inner peripheral surface of a bracket 27 formed in cylindrical fashion. Generating coils 25A and 26A are wound and mounted thereon. The rotating shaft 23 is supported via bearings at a side wall 27A of the bracket 27 and a side wall of an end bracket 28. The bracket 28 is disposed so as to cap an open end of the end bracket 27.

A slip ring assembly 29 is disposed on the rotating shaft 23 and electrically connected to lead terminals of the field coils 21A and 22A. The slip ring assembly 29 comprises the following components: slip rings 29A, 29B and 29C which are electrically insulated from each other via air gap among them; and brush holders that respectively hold a brush (-) 29a and brushes (+) 29b and 29c so as to respectively bring into sliding contact with the slip rings 29A, 29B and 29C. The slip ring assembly 29 is covered with a dust-proof cover 30 held by the end bracket 28. The voltage control regulators 17 and 20 are disposed and fixed by suitable means within an inner peripheral space of the dust-proof cover.

According to the present invention, a driving force of the rear-wheel driving motor is adjustable by the output of the second generator provided side by side with the first generator. Thereby the present invention makes it possible to ensure a sufficient driving force with a simple circuit configuration. Therefore, driving force performance that compares favorably with a so-called mechanical 4WD can be ensured over a wide driving range from the start of a vehicle to its high-speed slope-climbing driving. Generator per se can be constituted as a simple configuration and made easy to deal with extremely.

In the generating apparatus per se, two pairs of rotors are mounted to the same rotating shaft, and side faces of these rotors are in absolute contact with one another. A cooling fan is fixed on one side face of either of the rotors. By providing such a structure, the rotor on the anti-fan side can serve as a heatsink, and the generating apparatus is capable of performing effective cooling in a small-sized form.

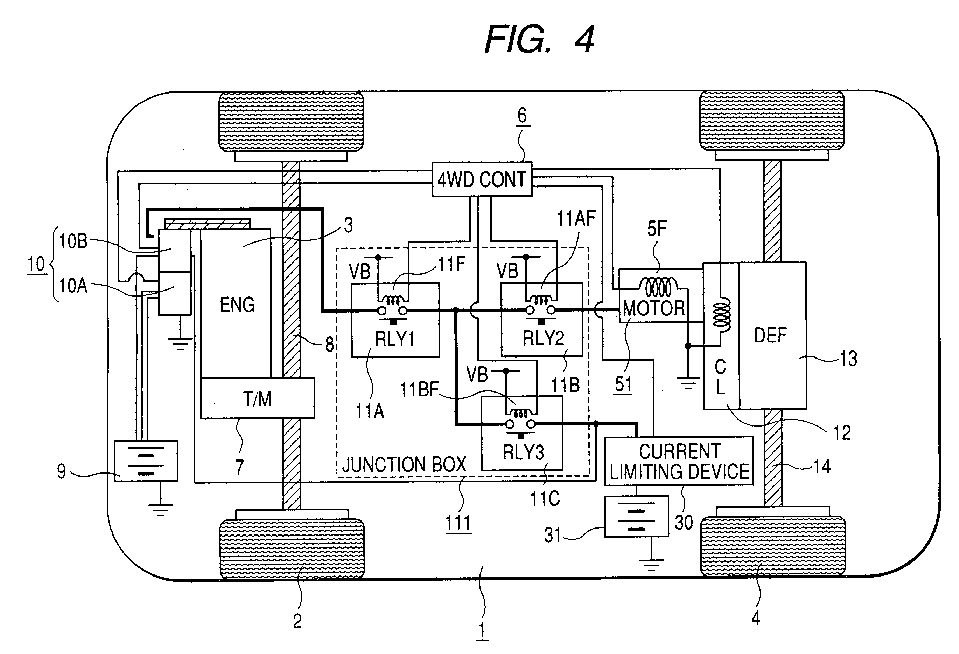

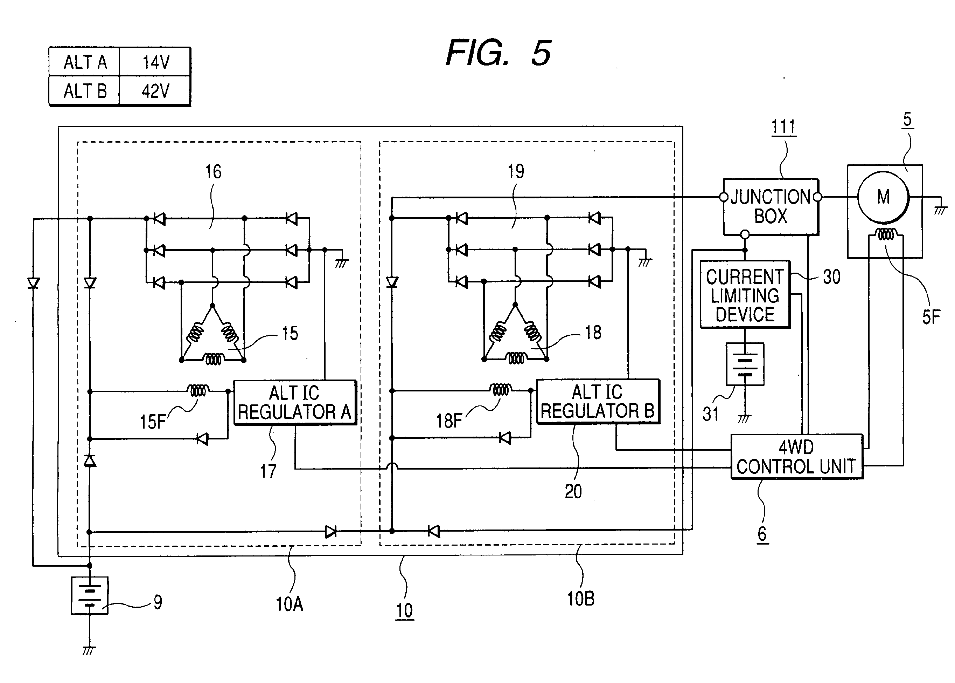

Fig. 4 shows a second embodiment of a vehicle driving system in which a motor drive circuit is provided with a high-voltage auxiliary battery 31 and relay 111 as a simple hybrid. All components except them are same as the first embodiment. Its circuit connections are illustrated in Fig. 5.

That is, the relay 111 is provided in series between a second generator 10B and an AC motor 51. Described specifically, a first relay 11A and a second relay 11B connected in series are provided and a third relay 11C is provided between the two relays 11A and 11B. A current can be supplied to the auxiliary battery 31 through the relay 11C and a current limiting device 30.

A summary of these operations is represented as shown in Table 1. Instructions from the 4WD controller 6 are produced to carry out the following modes described in the table 1,and the respective relays 11A-11C(RLY1-RLY3) are operated so as to meet instruction requests. Respective modes in table1 are various mode such as (1) EV (electric vehicle) running mode where a vehicle travels using the drive electric motor 5, (2) Engine startup mode where, in case of the tandem generator (generator 10) with a rotation sensing mechanism, the engine is started up while supplying the generator 10 with electric power for separate-excitation from the auxiliary battery 31 or battery 9 (namely while driving the generator 10 supplying the power for separate-excitation), (3) 4WD running mode where electric power is directly supplied from the tandem generator (generator 10) to the motor 5, so that a vehicle is allowed to be driven and run by the engine 3 and the motor, (4) charging mode of the auxiliary battery 31 from the tandem generator (generator 10), (5) charging mode of auxiliary battery 31 from the drive motor 5 during regenerative braking operation etc..

### [Table 1]

**Table 1**

| | tandem alterA (14V) | Tandem Alter B (48V) | RLY1 | RLY2 | RLY3 | Motor | Differential clutch | engine |
|---|---|---|---|---|---|---|---|---|
| 1.EV running | OFF | OFF | OFF | ON | ON | ON (powering) | ON | OFF |
| 2.Engine start | (ON) | (ON) | (ON) | (ON) | (ON) | (ON) | (ON) | ON |
| 3.4WD running | ON | ON | ON | ON | OFF | ON (powering) | ON | ON |
| 4.Charginc 1 of auxiliary battery | ON | ON | ON | OFF | ON | OFF | OFF | ON |
| 5.Chargin of auxiliary battery | ON | OFF | OFF | ON | ON | ON (regenerati on) | ON | ON |

While using an AC generator like a synchronous motor for rear-wheel driving as the simple hybrid is effective as high-power driving, there is a need to provide a device for recovering generated energy at regenerative braking. However, the auxiliary battery used even as an auxiliary power supply becomes effective to recovery such regenerative energy.

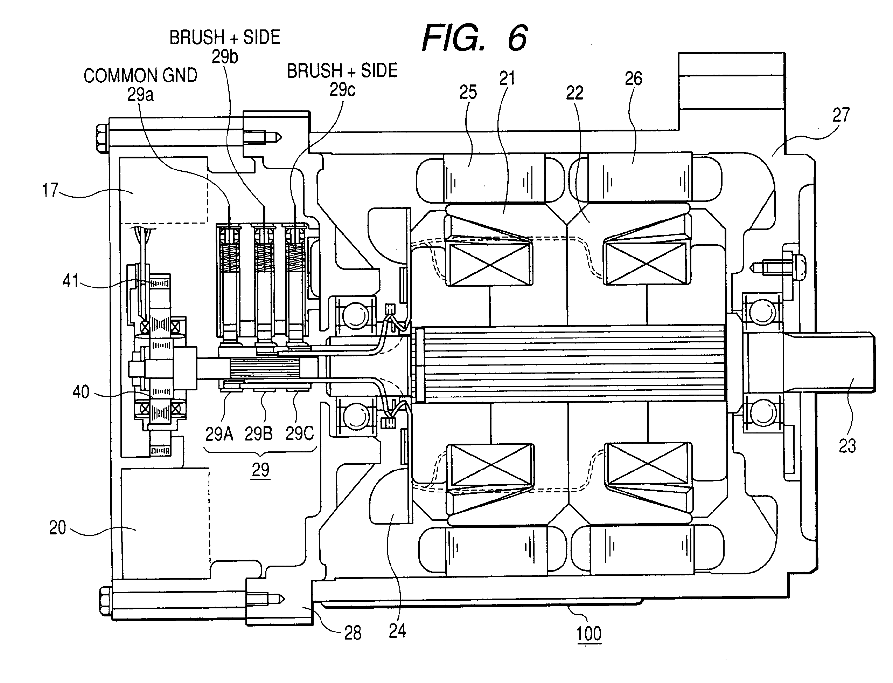

Fig. 6 shows a construction of a generating apparatus used as a motor/generator. Although it is identical in basic configuration to Fig. 3, mounting structure of a rotation sensor for the generator is considered as follows. That is, a part of rotating shaft 23 placed on the side of the slip ring assembly 29 of the rotor is extended, and a rotor 40 of a resolver is fixed to its extended part. The rotor 40 for the rotation sensor is disposed in space on the inner peripheral sides of the voltage control regulators 17 and 20 together with a stator 41. Since this structure enables effective use of dead space, a compact motor generator can be provided.

The above described exemplary embodiments can be combined in any way as a whole or in part in order to build up further embodiments optimized for the respective application. As far as such modifications of the above described embodiments are readily apparent for the skilled person they shall be disclosed implicitly by the above description of embodiments 1 - 4.

## Claims

1. A vehicle driving system in which one of front wheels (2) and rear wheels (4) is driven by an internal combustion engine (3) and the other thereof is driven by an electric motor (5), comprising:
a generating apparatus (10) that generates electric power by rotation of the internal combustion engine (3);
said electric motor (5) driven by electric power outputted from the generating apparatus (10); and
a control unit (6) for controlling output power of the generating apparatus (10) in accordance with a driving force requested from a vehicle and controlling the electric motor (5),
wherein the generating apparatus (10) comprises a tandem generator equipped with a charge function for charging a vehicle-mounted battery (9) and a power supply function for driving the electric motor (5).

2. The vehicle driving system according to claim 1,
wherein the electric motor (5) for the front or rear wheels (2,4) is a DC motor and comprises a motor/generator also used for a vehicle generator as required.

3. A vehicle driving system in which one of front wheels (2) and rear wheels (4) is driven by an internal combustion engine (3) and the other thereof is driven by an electric motor (5), comprising:
a generating apparatus (10) that generates electric power by rotation of the internal combustion engine (3); and
said electric motor (5) driven by electric power outputted from the generating apparatus (10),
wherein the generating apparatus (10) is a tandem generator comprising a generator for low-voltage generation, which supplies a vehicle-mounted battery (9) or the like with power, and a generator for high-voltage generation, which supplies the electric motor (5) with power.

4. The vehicle driving system according to claim 3,
wherein the generating apparatus (10) is a tandem type generator in which rotors (21,22) are disposed on the same rotating shaft (23) in contact with each other.

5. The vehicle driving system according to claim 3,
wherein the tandem type generator used as the generating apparatus (10) carries out initiating excitation using a common battery (9), and is switched to a self-excited generator after an engine (3) has started up.

6. The vehicle driving system according to one of claims 1 to 5, wherein a relay (11) on/off-controlled by a signal outputted from a control unit (6) is provided between the generator (10) for high-voltage generation and the motor (5), and the relay (11) is used for controlling supply of power to the electric motor (5) according to a running state of the vehicle.

7. The vehicle driving system according to one of claims 4 to 6, wherein a cooling fan (24) is provided only on a side face of one of the rotors (21,22) disposed in contact with each other, and the other rotor also serves as a heatsink.

8. The vehicle driving system according to claim 3,
wherein generating coils (15,18) of the generator (10A) for low-voltage generation and the generator (10B) for high-voltage generation comprise delta-delta connection.

9. A vehicle driving system in which one of front wheels (2) and rear wheels (4) is driven by an internal combustion engine (3) and the other thereof is driven by an electric motor (5), comprising:
a generating apparatus (10) that generates electric power by rotation of the internal combustion engine (3);
said electric motor (5) driven by electric power outputted from the generating apparatus (10); and
a control unit (6) for controlling output power of the generating apparatus (10) in accordance with a driving force requested from a vehicle and controlling the electric motor (5),
wherein the generating apparatus (10) includes: a generator (10A) for low-voltage generation, having a vehicle-mounted battery charging function; a generator (10B) for high-voltage generation, having a power supply function of the electric motor (5); a relay (11) provided between an output terminal of the generator (10B) for high-voltage generation and the electric motor (5), and on/off-controlled by an output signal of the control unit (6) whose output signal is generated depending upon the running state of the vehicle; and an auxiliary battery (9) which functions in response to the relay.

10. The vehicle driving system according to one of claims 1 to 9, wherein the generator (10B) for high-voltage generation includes an initiating excitation circuit configured with an auxiliary battery.

11. The vehicle driving system according to one of claims 1 to 10, wherein the generating apparatus (10) has the following functions: a function as a generator for supplying a vehicle-mounted battery with power, and a function as a power supply for supplying energy for the electric motor that directly drives either the front wheels or the rear wheels.

12. The vehicle driving system according to one of claims 1 to 11, wherein the generating apparatus (10) has the following components: tandem rotors; a slip ring (29) provided on an one end side of a rotating shaft (23) for supporting the tandem rotors (21,22); two pairs of brushes disposed on the slip ring to supply field currents for the tandem rotors (21,22); and a rotation sensor mounted to the end side of the rotating shaft (23) to sense a rotational speed.

13. The vehicle driving system according to one of claims 1 to 12, wherein voltage regulators (17,20) for controlling voltages of said respective generators (10A,10B) are disposed around the rotation sensor and fixed to a rectifier cover.
